# EUROPÄISCHE PATENTSCHRIFT

(11) **EP 2 829 833 B1**
(45) Veröffentlichungstag und Bekanntmachung des Hinweises auf die Patenterteilung: **11.11.2020**
(21) Anmeldenummer: 14002610.5
(22) Anmeldetag: 25.07.2014
(51) Int. Cl.: F28D 7/00, F24D 17/00, F28D 7/10, F28D 21/00

(54) **Einrichtung zur Entwärmung von Abwasser**
Device for dissipating heat from waste water
Dispositif de dissipation de la chaleur d'eaux usées

(30) Priorität: 25.07.2013 DE 102013012379
(43) Veröffentlichungstag der Anmeldung: 28.01.2015
(73) Patentinhaber: Aschauer, Johann, Dipl.-Ing. Mag., 4362 Bad Kreuzen (AT)
(72) Erfinder: Aschauer, Johann, Dipl.-Ing. Mag., 4362 Bad Kreuzen (AT)
(74) Vertreter: Dupal, Helmut

(56) Entgegenhaltungen:
- EP-A2- 2 148 160
- AT-A4- 509 213
- DE-A1-102008 017 380
- DE-U1- 29 615 555
- US-A1- 2008 000 616

## Beschreibung

Die Erfindung betrifft eine Einrichtung zur Entwärmung von Abwasser mit den Merkmalen des Oberbegriffes des ersten Anspruches.

Es ist bekannt, Abwasser aus Verbrauchseinrichtungen, wie Bädern, Duschen, Waschbecken oder dergleichen einzeln oder aber in Abwasserleitungen zusammengefasst, aus Gebäudeteilen oder Gebäuden gesammelt mit Wärmeaustauschern zu entwärmen.

Es ist auch bekannt, Rückwasser das zum Verbrauch bestimmt ist, mit Solarwärme oder anderen Wärmequellen mit Wärme-autauschern oder auch mit elektrischer Wärme, insbesondere aus elektrischen Solaranlagen, zu erwärmen.

Aus der Patentanmeldung US 2008/0000616 A1 ist eine Einrichtung zur Entwärmung von Abwasser nach dem Oberbegriff des Anspruchs 1 bekannt.

Eine praktisch gleiche Anordnung ist aus der DE 10 2008 017 380 A1 bekannt, deren Aufbau jenem der vorgenannten Druckschrift entspricht.

Beiden Anordnung haften mehrere Nachteile an, die den Wirkungsgrad des Wärmeaustausches vermindern, die nach-stehend angeführt sind.

Nachteilig ist beim Wärmeaustausch der meist sehr unterschiedliche Anfall an zu entwärmenden Abwasser und der dadurch und durch das Erfordernis der Speicherung des Rückwassers, der dadurch verringerte Wirkungsgrad des Wärmeaustausches. Ebenso nachteilig ist, dass der Anfall an Abwasser stets zeitlich verschoben ist gegenüber dem auftretenden Bedarf.

Es ist daher Ziel der Erfindung, eine Einrichtung zur Entwärmung von Abwasser zu schaffen, bei der diese beschriebenen Nachteile vermieden werden und den Wirkungsgrad des Wärmeaustausches zu steigern und robust für den praktischen Betrieb einzurichten, sowie die Zuführung von Fremdenergie ohne besonderen Aufwand zu ermöglichen.

Diese Aufgabe wird bei einer Einrichtung der eingangs genannten Art, nach dem Oberbegriff des Anspruches 1, mit den Merkmalen des kennzeichnenden Teiles des Anspruches 1 gelöst.

Die Unteransprüche betreffen besonders vorteilhafte Ausgestaltungen der Erfindung, die Fortbildungen zur Erzielung besonders wirksamer Anordnungen betreffen.

Eine Einrichtung zur Entwärmung von Abwasser ist am vorteilhaftesten für eine Einrichtung an einer Abwasserableiteinrichtung für die gesammelte Ableitung von Abwasser aus einem Gebäudeteil oder einem oder mehreren Gebäuden.
Es können mit der erfinderischen Einrichtung aber auch einzelne oder kleinere Abwasserableitungen behandelt werden.
Die Einrichtung umfasst einen Gegenstromwärmeaustauscher, der an eine von dem/den Verbraucher/n kommende Abwasserleitung und an eine weiterführende Abwasserleitung angeschlossen ist.

Der Gegenstromwärmeaustauscher besteht aus mehreren Wärmeaustauschrohren, von denen jedes ein Abwasserrohr und ein Rückwasserrohr umfasst, die etwa waagerecht ausgerichtet sind. Das Rückwasserrohr führt, je nach Bestimmung, Frischwasser oder Grauwasser vorgesehener Herkunft zur Entwärmung des Abwassers durch den Gegenstromwärmeaustauscher zum vorgesehenen Verbraucher.

Bei durchgehenden Rohren des Gegenstromwärmeaustauschers ergibt sich durch den ungleichmäßigen Strom von Abwasser und Rückwasser infolge des schwankenden Verbrauches mit Stillstandszeiten und durch die Zeitverschiebung zwischen den beiden Strömen, aber auch durch die Wärmeleitfähigkeit der Rohre ein herabgesetzter Wirkungsgrad bei der Wärmerückgewinnung.

Die Erfindung beseitigt diesen Nachteil in einfacher Weise durch Unterteilung des Gegenstromwärmeaustauschers in eine Mehrzahl von Wärmeaustauschrohren, die thermisch voneinander getrennt sind und darüberhinaus und besonders wichtig, durch eine hydraulische Trennung dieser Wärmeaustauschrohre bei Stillstand der Strömung, die ohne bewegliche Absperrvorrichtungen auskommt.

Dies wird dadurch erreicht, dass zwischen den Wärmeaustauschrohren und nach dem letzten Wärmeaustauschrohr ein Rohrbogenstück in das Abwasserrohr eingesetzt ist, das aus einem gering leitenden Material wie Kunststoff besteht.
Dabei ist aber auch notwendig, dass die Höhe des Rohrbogenstückes ein Mehrfaches des Außendurchmessers des Abwasserrohres beträgt; besondere vorteilhaft ist das zwei- bis dreifache.

Bei in der Praxis auftretenden Einsatzbedingungen, wie Temperaturdifferenz, Mengenstrom und Abwasserbeschaffenheit ist die Unterteilung des Gegenstromwärmeaustauschers in 4 bis 10 Stufen von Wärmeaustauschrohren für die Erzielung eines hohen Wirkungsgrad der Entwärmung besonders vorteilhaft, weil dadurch Wärmeübergang und damit Wärmeverluste entlang der ungeteilten Abwasser- und Rückwasserrohre sehr verringert werden.

Um im Abwasserrohr des Gegenstromwärmeaustauschers eine genügende Strömung und die Schwallhöhe für den Durchfluss herzustellen, ist es in einfacher Weise möglich, diesen an die Abwasserleitung über ein vorgeordnetes Fallrohr, das mit dieser zusammen eine geeigneter Höhe aufweist, anzuschließen. Zur Herstellung einer hinreichenden Saugwirkung ist das Abwasserrohr des Gegenstromwärmeaustauschers über ein nachgeordnetes Fallrohr an die weiterführende Abwasserleitung anzuschließen, das mit dieser zusammen die geeignete Höhe besitzt.

Für einen wirksamen Wärmeübergang ist es unerlässlich, das bei innenliegendem Abwasserrohr des Wärmeaustauschrohres, dieses aus Metall oder gut leitendem Kunststoff oder gut leitender Keramik oder dergleichen hergestellt ist, während das Rückwasserrohr, wie bereits erwähnt, günstiger aus Material mit hohem Wärmewiderstand, insbesondere aus Kunststoff, besteht. Wird das Abwasserrohr außen geführt ist die Verwendung dieses Materials genau umgekehrt.

Bei den praktisch zu erwartenden Bedingungen der Entwärmung und damit der Temperaturdifferenz in einem Rohr, sind Längen von etwa 0,5 bis 1 Meter der Wärmeaustauschrohre, am günstigsten.

Bei vertikal übereinander liegender Anordnung der Wärmeaustauschrohre sind diese selbst etwa horizontal ausgerichtet wobei der Abstand aufeinanderfolgender Wärmeaustauschrohre ein Mehrfaches, insbesondere das zwei- bis vierfache, des Außendurchmessers der Wärmeaustauschrohre betragen soll, um eine einwandfrei Montage und Wartung zu gestatten.

Nach dem abschließenden Rohrbogenstück aus Kunststoff an jedem Wärmeaustauschrohr verbindet ein Krümmer mit dem Abwasserrohr des folgenden Wärmeaustauschrohres und der weiterführenden Abwasserleitung.

Die Anordnung der Wärmeaustauschrohre eines Gegenstromwärmeaustauschers kann mit dem gleichen Erfolg durch vertikal übereinander liegende oder etwa waagerecht hintereinander oder waagerecht nebeneinander vorgenommen werden, je nach dem es die räumlichen Gegebenheiten erfordern. Es kann jedoch auch eine spiralige oder eine schraubenförmige Gestaltung verwendet werden, wenn dies etwa aus räumlichen Gründen geboten erscheint, wobei in den Abständen, die jenen von geraden Wärmeaustauschrohren entspricht, die zwischen-geschalteten Rohrbogenstücke eingesetzt sind.

Um auch bei auftretenden Verlegungen der Abwasserrohre des Gegenstromwärmeaustauschers die Ableitung des Abwassers zu ermöglichen, bis der biologische Abbau von Verlegungsmaterial und die Schwallhöhe der Zuleitung den Durchfluss wieder frei macht, ist eine Bypass-Leitung, die zur Entlüftung ohnedies notwendig ist, zur Ableitung des Abwassers vorgesehen, die an das zuleitende Fallrohr angeschlossen. Diese wird günstigerweise neben den Wärmeaustauschrohren des Gegenstromwärmeaustauschers geführt.
Der Anschluss der Bypass-Leitung erfolgt an diesem Fallrohr, das dem Gegenstromwärmeaustauscher vorgeordnet ist, mit einem gegen die Strömungsrichtung abzweigenden Krümmer und Ende an dem weiteren Fallrohr, das an der weiterführenden Abwasserleitung mit einem Rohrbogenstück aus Kunststoff angeschlossen ist.

Zur Erzielung einer ausreichenden Schwallhöhe bei einem gegebenen Durchflusswiderstand des Gegenstromwärmeaus-tauscher ist darauf zu achten, dass das vorgeordnete Fallrohr bis zur Anschlussstelle an den Gegenstromwärmeaustauscher eine entsprechende Höhe, von bevorzugt dem drei- bis zehnfachen, des Außendurchmessers der Wärmeaustauschrohre aufweist.

Das Abwasserrohr und Rückwasserrohr eines Wärmeaustauschrohres weisen etwa den gleichen Volumeninhalt pro Längeneinheit auf.

Damit die aufgewärmte Rückwassermenge den Erfordernissen in etwa entspricht, ist das Volumen der Rückwasserrohre der Wärmeaustauschrohre des gesamten Gegenstromwärmeaustauschers mit etwa 5 bis 50% und bevorzugt 20% des Tagesbedarfes an Rückwasser vorgesehen.

Neben der Doppelrohrausführung ist es auch möglich, Wärmeaustauschrohre aus zwei Formrohren herzustellen, die das Abwasserrohr und das Rückwasserrohr bilden, wobei sie jeweils mit einem gegengleichen, im besonderen ebenen, Flächenteil aneinandergelegt und verbunden, vorteilhafter Weise verschweißt sind oder sie sind unter Zwischenlage eines Materials hoher Wärmeleitfähigkeit verbunden.

Zur weiteren Entwärmung des Abwassers kann bei wenigstens einem Wärmeaustauschrohr, das im Austrittsbereich zur weiterführenden Abwasserleitung angeordnet ist, wenigstens ein Abwasserrohr, das im Austrittsbereich des Rückwassers angeordnet ist, jeweils mit ebenen Flächenteilen einander zugewandt sein und dazwischen wenigstens ein Peltierelement angebracht sein. Dabei können Zwischenlagen aus einem Material hoher Wärmeleitfähigkeit eingebracht sein.

Das Peltierelement wird vorteilhafter Weise mit Gleichstrom gespeist, der unmittelbar aus einer Solarzellenvorrichtung zugeführt wird.

Zur weiteren Erwärmung des Rückwassers günstig wenigstens bei einem der Wärmeaustauschrohre, das im Austrittsbereich des Rückwassers angeordnet ist, ein Rückwasserrohr aus einem Material hoher Wärmeleitfähigkeit, mit einem vorzugsweise rechteckigen Formrohr ebenfalls aus einem Material hoher Wärmeleitfähigkeit zu umwickeln, in dem Wasser aus einer Solareinrichtung oder aus einer beliebigen anderen Wärmequelle zugeführt wird.

Es ist auch möglich ein mit einer elektrischen Heizung versehenes Formrohr mit Strom aus einer elektrischen Solareinrichtung oder aus einer beliebigen anderen Stromquelle zu speisen.

Die Wicklung erfolgt vorteilhaft unter Zwischenlage eines Materials hoher Wärmeleitfähigkeit.

Dort wo keine ausreichende Schwallhöhe in der vorgeordneten Abwasserleitung zum Gegenstromwärmeaustauscher hergestellt werden kann, ist die Verwendung einer Vorrichtung zur Erzeugung von hydraulischem Druck vorteilhaft, die etwa an das Fallrohr angeschlossen werden kann und die bei Erhöhung des Durchflusswiderstandes der Abwasserrohre der Wärmeaustauschrohre, über eine einstellbare Schwelle, eingeschaltet wird.

Ausführungsbeispiele der Erfindung werden nachstehend an Hand der Zeichnung beschrieben.

Es zeigen:
- Fig. 1: einen Gegenstromwärmeaustauscher mit vertikal übereinander angeordneten Wärmeaustauschrohren in Seitenansicht, schematisch;
- Fig. la: den Querschnitt durch ein Wärmeaustauschrohr, schematisch;
- Fig. 2: einen Gegenstromwärmeaustauscher mit waagerecht hintereinander angeordneten Wärmeaustauschrohren in Seitenansicht, schematisch;
- Fig. 3: den Längsschnitt durch ein Wärmeaustauschrohr aus aneinandergefügten Formrohren, schematisch;
- Fig. 3a: den Querschnitt durch ein Wärmeaustauschrohr aus aneinandergefügten Formrohren, schematisch;
- Fig. 4: den Längsschnitt durch Formrohre eines Wärme-Austauschrohres mit zwischengelegtem Peltierelement, schematisch;
- Fig. 4a: den Querschnitt durch Formrohre eines Wärmeaustauschrohres mit zwischengelegtem Peltierelement, schematisch;
- Fig. 5: ein Wärmeaustauschrohr umwickelt mit einem rechteckigen Formrohr, schematisch.

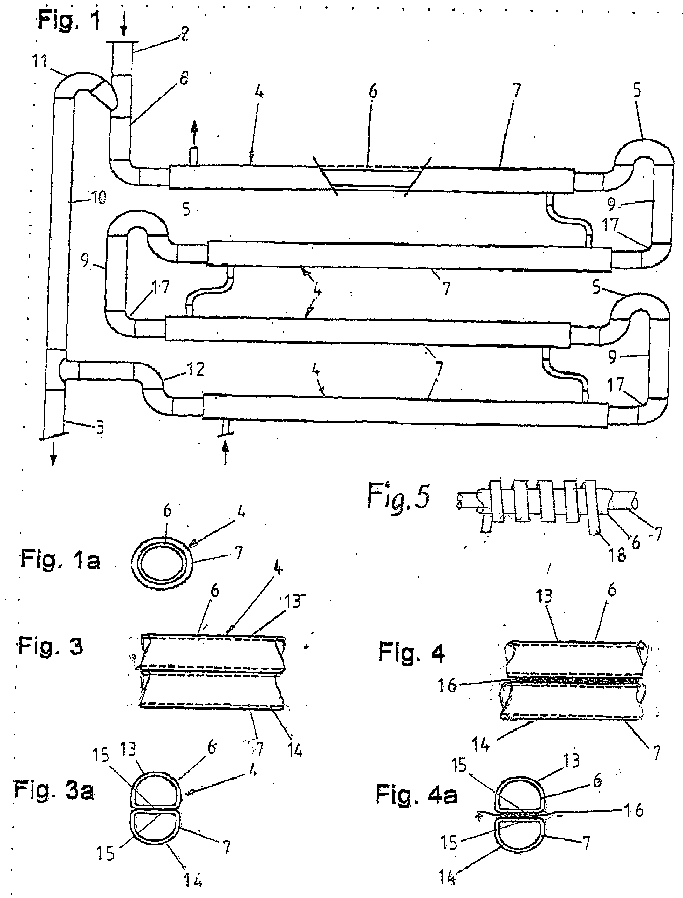

In Fig. 1 ist eine Anordnung eines Gegenstromwärmeaus-tauschers 1 wiedergegeben, bei der die Wärmeaustauschrohre 4 vertikal übereinander angeordnet sind.

Die Wärmeaustauschrohre 4 bestehen aus Doppelrohren, bei denen innen ein Abwasserrohr 6 liegt, das von einem Rückwasserrohr 7 umgeben ist.

Zwischen zwei Wärmeaustauschrohren 4 sind an deren Abwasserrohre 6 jeweils Rohrbogenstücke 5, nach oben gekrümmt, eingesetzt und mit einem Fallrohr 9 verbunden, das mit einem Krümmer 17 an das Abwasserrohr 6 des darunterliegenden Wärmeaustauschrohr 4 angeschlossen ist.
Nach dem letzten Wärmeaustauschrohr 4 ist das Abwasserrohr 6 mit einem nach oben gekrümmten Rohrbogenstück 12 an eine weiterführende Abwasserleitung 3 angeschlossen.

An den Rückwasserrohren 7 der Wärmeaustauschrohre 4 sind Anschlüsse für das Rückwasser angebracht, die untereinander, mit Schläuchen, für die Führung im Gegenstrom zum Abwasser sind.

Die Zuführung des Abwassers geschieht mit einer Abwasserleitung 2 durch ein Fallrohr 8.

An das Fallrohr 8 ist ein Krümmer 11 schräg nach oben geführt abzweigend angeschlossen, der mit einer Bypass-Leitung 10 verbunden ist, die an dem Gegenstromwärmeaustauscher 1 vorbei führt und in die weiterführende Abwasserleitung 3 mündet.

Fig. 1a zeigt die Doppelrohranordnung eines Wärmeaustauschrohres 4 mit Abwasserrohr innen und Rückwasserrohr außen.

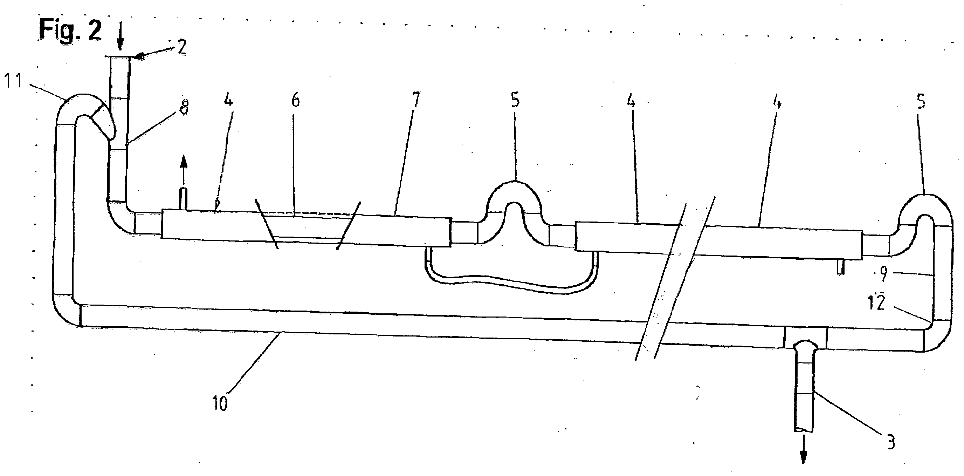

Bei der in Fig. 2 wiedergegebenen Anordnung eines Gegenstromwärmeaustauschers 1 sind zwei, waagerecht nebeneinander Angeordnete Wärmeaustauschrohre 4 dargestellt und mehrere angedeutet.

Die Zuführung des Abwassers erfolgt mit einer vorgeordneten Abwasserleitung 2 über ein vorgeordnetes Fallrohr 8 in das Abwasserrohr 6 des ersten Wärmeaustauschrohres 4, das aufgeschnitten dagestellt ist, um die Lage von Abwasserrohr 6 und Rückwasserrohr 7 zu zeigen.

Zwischen den Abwasserrohren 6 der beiden dargestellten Wärmeaustauschrohre 4 ist ein nach oben gekrümmtes Rohrbogenstück 5 eingesetzt und ebenso nach dem letzten Wärmeaustauschrohr 4, an das ein nachgeordnetes Fallrohr 9 anschließt, das mit mittels eines Rohrbogenstückes 12 an die nachgeordnete Abwasserleitung 3 angeschlossen ist.

Zur Entlüftung und Ableitung bei Verlegung des Gegenstromwärmeaustauschers 1 ist am vorgeordneten Fallrohr 8 eine Bypass-Leitung 10 angebracht, die mit einem nach oben schräg abzweigenden Krümmer 11 angeschlossen ist.
Die Bypass-Leitung 10 führt parallel zum Gegenstromwärmeaustauscher 1 und mündet in die nachgeordnete Abwasserleitung.

Die Anordnung von Formrohren 13 und 14 als Abwasserrohre 6 und Rückwasserrohre 7 der Wärmeautauschrohre 4 eines Gegenstromwärmeaustauschers 1 zeigt Fig. 3 und 3a im Querschnitt, wo die ebenen Flächenteile 15, mit denen diese zusammengefügt sind, zu erkennen sind.
Die Formrohre können aus Verbundmaterial gefertigt sein, bei dem die ebenen Flächeneile 15 aus einem Material mit hoher Wärmeleitfähigkeit bestehen.

Fig. 4 und 4a veranschaulicht die Anbringung eines Peltierelementes 16 zwischen den ebenen Flächenteilen 15 der Formrohre 13 und 14, die Abwasserrohr 6 und Rückwasserrohr 7 eines Wärmeautauschrohres 4 bilden.

Ein Teilstück eines Wärmeautauschrohres 4 ist in Fig. 5 dargestellt, bei dem das Rückwasserrohr 7 mit einem Formrohr 18 mit rechteckigen Querschnitt umwickelt ist, das zur Nachwärmung des Rückwassers dient.

### Bezugszeichenliste

- 1: Gegenstromwärmeaustauscher
- 2: Abwasserleitung vorgeordnet
- 3: Abwasserleitung weiterführend
- 4: Wärmeaustauschrohr des Gegenstromwärmeaustauschers 1
- 5: Rohrbogenstück des Gegenstromwärmeaustauschers 1
- 6: Abwasserrohr des Wärmeaustauschrohres 4
- 7: Rückwasserrohr des Wärmeaustauschrohres 4
- 8: Fallrohr vorgeordnet dem Gegenstromwärmeaustauscher 1
- 9: Fallrohr nachgeordnet dem Gegenstromwärmeaustauscher 1
- 10: Bypass-Leitung zum Gegenstromwärmeaustauscher 1
- 11: Krümmer nach oben schräg abzweigend
- 12: Rohrbogenstück zwischen nachgeordnetem Fallrohr 9 und Weiterführender Abwasserleitung 3
- 13: Formrohr des Wärmeaustauschrohres 4 als Abwasserrohr 6
- 14: Formrohr des Wärmeaustauschrohres 4 als Rückwasserrohr 7
- 15: gegengleicher/ebener Flächenteil des Formrohres 13 und des Formrohres 14
- 16: Peltierelement
- 17: Krümmer am Abwasserrohr 6 eines Wärmeaustauschrohres 4 zum Abwasserrohr 6 eines darauffolgenden Wärmeaustauschrohres 4
- 18: rechteckiges Formrohr Rückwasserrohr 7 umwickelnd

## Patentansprüche

1. Einrichtung zur Entwärmung von Abwasser einer Abwasserleitung (2) bei der zwischen ein vorgeordnetes Fallrohr (8) und ein nachgeordnetes Fallrohr (9), das in eine weiterführende Abwasserleitung (3) mündet, ein Gegenstromwärmeaustauscher (1) eingesetzt ist, der aus mehreren aneinander gereihten Wärmeaustauschrohren (4) besteht, die etwa waagerecht ausgerichtet sind und jedes ein Abwasserrohr (6) aus einem Material mit hoher Wärmeleitfähigkeit und ein Rückwasserrohr (7) umfasst, wobei sich nach dem letzten Wärmeaustauschrohr (4) an das Abwasserrohr (6) ein Rohrbogenstück (12) anschließt, dessen Höhe ein Mehrfaches, etwa das Zwei- bis Dreifache, von dessen Außendurchmesser besitzt und die Rohre bei Stillstand gefüllt erhält und die Abwasserrohre (6) aufeinanderfolgender Wärmeaustauschrohre (4) mit jeweils einem Rohrbogenstück verbunden sind, das aus einem Material mit geringer Wärmeleitfähigkeit, etwa aus Kunststoff, besteht und voneinander thermisch trennt und das vorgeordnete Fallrohr (8) mit dem Zuleitungsrohr und das nachgeordnete Fallrohr (9) mit der Abwasserleitung die ausreichende Schwallhöhe und die Saughöhe für den Durchfluss, etwa dem drei- bis zehnfachen, des Außendurchmessers der Wärmeaustauschrohre (4) entsprechend, aufweisen, **dadurch gekennzeichnet, dass** zwischen den Abwasserrohren (6) aufeinanderfolgender Wärmeaustauschrohre (4) des Gegenstromwärmeaustauschers (1) das jeweils eine Rohrbogenstück (5) eingesetzt ist, dessen Höhe ein Mehrfaches, etwa das zwei- bis drei-fache, des Außendurchmessers des Abwasserrohres (6) beträgt und bei Stillstand aufeinander folgende Abwasserrohre (6) hydraulisch trennt und aus einem Material mit geringer Wärmeleitfähigkeit, etwa aus Kunststoffe besteht, wobei Abwasserrohr (6) und Rückwasserrohr (7) eines Wärmeaustauschrohres (4) etwa den gleichen Volumeninhalt pro Längeneinheit aufweisen und die Rückwasserrohre (7) insgesamt 5 bis 50%, etwa 20%, des Tagesbedarfes des Rückwasserverbrauches enthalten wobei und eine Bypassleitung (10) vor dem Gegen-stromwärmeaustauscher (1) mit gegen die Strömung gerichteten Krümmer (11) am Fallrohr (8) angeschlossen ist und parallel zum Gegenstromwärmeaustauscher (1) oder an dem Gegenstromwärmeaustauscher vorbei führt und in die nachgeordnete weiterführende Abwasser-leitung (3) mündet.

2. Einrichtung nach Anspruch 1, **dadurch gekennzeichnet, dass** der Gegenstromwärmeaustauscher (1) 4 bis 10 Stufen von Wärmeaustauschrohren (4) umfasst, die Längen von etwa 0,5 bis 1 Meter, je nach der jeweiligen Wärmeleitfähigkeit des Rohrmaterials, aufweisen.

3. Einrichtung nach Anspruch 1 oder 2, **dadurch gekennzeichnet, dass** von dem Wärmeaustauschrohr (4), bei innenliegendem Abwasserrohr, zumindest das Abwasserrohr (6), aus Metall oder gut leitendem Kunststoff oder gut leitender Keramik oder dergleichen und das Rückwasserrohr (7) aus Material mit hohem Wärmewiderstand etwa Kunststoff Besteht.

4. Einrichtung nach Anspruch 1, 2 oder 3, **dadurch gekennzeichnet, dass** vertikal übereinander liegende Wärmeaustauschrohre (4) horizontal ausgerichtet sind und der Abstand aufeinanderfolgender Wärmeaustauschrohre (4) ein Mehrfaches, etwa das Zwei- bis Vierfache, des Außendurchmessers der Wärmeaustauschrohre (4) entspricht und nach einem abschließenden Rohrbogenstück (5) aus Kunststoff ein Krümmer (17) mit dem Abwasserrohr (6) des folgenden Wärmeaustauschrohres (4) verbindet.

5. Einrichtung nach einem der Ansprüche 1 bis 4, **dadurch gekennzeichnet, dass** die Wärmeaustauschrohre (4) aus zwei Formrohren (13 und 14) bestehen, die das Abwasserrohr (6) und das Rückwasserrohr (7) bilden, jeweils mit einem ebenen Flächenteil (15) aneinandergelegt und verbunden, vorzugsweise verschweißt sind oder mit einer Zwischenlage aus einem Material hoher Wärmeleitfähikeit verbunden sind und insbesondere wenigstens bei einem der Wärmeaustauschrohre (4) im Austrittsbereich zur weiterführenden Abwasserleitung (3) und/oder bei wenigstens einem der Wärmeaustauschrohre (4) im Austrittsbereich des Rückwassers zwischen dem Abwasserrohr (6) und dem Rückwasserrohr (7) jeweils wenigstens ein Peltierelement (16) angebracht ist, das mit Gleichstrom, unmittelbar etwa aus einer Solarzellenvorrichtung, gespeist wird.

6. Einrichtung nach einem der Ansprüche 1 bis 4 oder 5, **dadurch gekennzeichnet, dass** wenigstens bei einem der Wärmeaustauschrohre (4) das im Austrittsbereich des Rückwassers angeordnet ist, ein Rückwasserrohr (7) aus einem Material hoher Wärmeleitfähigkeit mit einem, insbesondere rechteckigen, Formrohr (18) mit hoher Wärmeleitfähigkeit umwickelt ist, in dem Wasser aus einer Solareinrichtung oder einer beliebigen Wärmequelle zugeführt wird oder das Formrohr (18) mit einer elektrischen Heizung versehen ist, die aus einer elektrischen Solareinrichtung oder einer beliebigen Stromquelle gespeist wird und insbesondere unter Zwischenlage eines Materials hoher Wärmeleitfähigkeit angebracht ist.

7. Einrichtung nach Anspruch 1, **dadurch gekennzeichnet, dass** an die Abwasserleitung (2) eine hydraulischen Druck erzeugende Vorrichtung angeschlossen ist, die bei Erhöhung des Durchflusswiderstandes der Abwasserrohre (6) der Wärmeaustauschrohre (4), über eine einstellbare Schwelle, einschaltbar ist.

## Claims

1. Device for dissipating heat from wastewater of a sewage pipe (2) into which is inserted, between an upstream downpipe (8) and a downstream downpipe (9) flowing into a continuing sewage pipe (3), a countercurrent heat exchanger (1) consisting of several heat exchanger tubes (4) arranged next to one another, which are aligned horizontally, and every sewage pipe (6) consisting of a material of high thermal conductivity and comprising a return water pipe (7), the final heat exchanger tube (4) being joined by a pipe elbow piece (12), the height of which significantly exceeds several times, about two to three times, the outer diameter of the heat exchanger tube and which maintains the pipes in a filled state when stopped, and the sewage pipes (6) of successive heat exchanger tubes (4) being connected to one pipe elbow piece each, which consists of a material with low thermal conductivity such as plastic, and thermally separates them from one another, and the upstream downpipe (8) along with the feeder pipe presenting the required surge height, and the downstream downpipe(9) along with the sewage pipe presenting the suction height for the water flow, both of which exceed three to ten times the outer diameter of the heat exchanger tubes (4), **characterized in that** a pipe elbow piece (5), the height of which exceeds several times, about two or three times the outer diameter of the sewage pipe (6) and, when stopped, hydraulically separates the successive sewage pipes (6) and consists of a material with low thermal conductivity, such as plastic, is inserted between the sewage pipes (6) of the successive heat exchanger tubes (4) of the countercurrent heat exchanger (1), the sewage pipe (6) and the return water pipe (7) of a heat exchanger tube (4) having approximately the same volumetric content per length unit, and the return water pipes (7) containing in total 5 to 50%, about 20%, of the daily requirement of return water consumption, a bypass line (10) being in front of the countercurrent heat exchanger (1) connected to the downpipe (8) by means of an elbow (11) positioned against the direction of the current and running in parallel to the countercurrent heat exchanger (1) and flowing into the continuing downstream sewage pipe (3).

2. Device according to claim 1, **characterized in that** the countercurrent heat exchanger (1) comprises 4 to 10 levels of heat exchanger tubes (4) presenting lengths of about 0.5 to 1 meter, depending on the respective thermal conductivity of the tube material.

3. Device according to claim 1 or 2, **characterized in that** at least the sewage pipe (6) of the heat exchanger tube (4), consists, in the case of an internal sewage pipe, of metal or plastic with high thermal conductivity or ceramics with high thermal conductivity or similar material, and the return water pipe (7) consists of a with high heat resistance such as plastic.

4. Device according to claim 1, 2 or 3, **characterized in that** heat exchanger tubes (4) being positioned vertically one above the other (4) are aligned horizontally and that the distance of the successive heat exchanger tubes (4) exceeds several times, about two to four times, the outer diameter of the heat exchanger tubes (4), and, after a final pipe elbow piece (5) made of plastic, an elbow (17) is connected to the sewage pipe (6) of the successive heat exchanger tube (4).

5. Device according to one of the claims 1 to 4, **characterized in that** the heat exchanger tubes (4) are composed of two shaped tubes (13 and 14) which form the sewage pipe (6) and the return water pipe (7), are laid next to each other and connected, preferably welded or connected with a flat surface part (15), or are connected by means of an intermediate layer of a material with high thermal conductivity, and at least one Peltier element (16) which is supplied with direct current generated immediately, e.g. from a solar cell system, is attached to, in particular, at least one of the heat exchanger tubes (4) in the outlet area leading to the continuing sewage pipe (3) and/or at least one of the heat exchanger tubes (4) in the outlet area of the return water between the sewage pipe (6) and the return water pipe (7).

6. Device according to one of the claims 1 to 4 or 5, **characterized in that** a return water pipe (7) of a material with high thermal conductivity, which is enveloped by a notably rectangular shaping tube (18) with high thermal conductivity, into which water is supplied from a solar system or any other type of heat source, or the shaping tube (18) is equipped with an electric heating system which is supplied from an electric solar device or any other type of heat source, and which is, in particular, attached by means of an intermediate layer of material with high thermal conductivity (4), is mounted, in particular, incorporating an intermediate layer of a material of high thermal conductivity, in at least one of the heat exchanger tubes (4) positioned in the outlet area of the return water.

7. Device according to claim 1, **characterized in that** the sewage pipe (2) is connected to a device for the generation of hydraulic pressure, which can be switched on via an adjustable threshold as soon as the flow resistance of the sewage pipes (6) of the heat exchanger tubes (4) increases.

## Revendications

1. Dispositif de dissipation de la chaleur des eaux usées d'un égout (2) dans lequel il est inséré, entre un tuyau de descente disposé en amont (8) et un tuyau de descente disposé en aval (9) débouchant dans un égout continuant (3), un échangeur de chaleur à contre-courant (1) composé de plusieurs tubes d'échange de chaleur rangés côte à côte (4) qui sont orientés horizontalement, et chaque conduite d'égout (6) étant composé d'un matériau à haute conductivité thermique et comprenant un tuyau d'eau de retour (7), la conduite d'égout (6) étant après le dernier tube d'échange de chaleur (4) joint par un élément de tuyau coudé (12), dont la hauteur dépasse plusieurs fois, environ deux ou trois fois, le diamètre extérieur du même et à l'arrêt maintient les tubes remplis, et toutes les conduites d'égout (6) des tubes d'échange de chaleur (4) successifs étant raccordés à un élément de tuyau coudé (12) qui est composé d'un matériau à faible conductivité thermique, comme par exemple du plastique, et les isole thermiquement les uns des autres, et le tuyau de descente disposé en amont (8) ensemble avec le tuyau d'alimentation possédant la hauteur de l'onde suffisante et le tuyau de descente disposé en aval (9) ensemble avec l'égout (2) possédant la hauteur d'aspiration pour l'écoulement de l'eau, tous les deux dépassant trois à dix fois le diamètre extérieur des tubes d'échange de chaleur (4), **caractérisé en ce qu'**un élément de tuyau coudé (5) est inséré entre toutes les conduites d'égout (6) des tubes d'échange de chaleur (4) successifs de l'échangeur de chaleur à contre-courant (1), dont la hauteur dépasse plusieurs fois, environ deux à trois fois, le diamètre extérieur de la conduite d'égout (6), et à l'arrêt sépare hydrauliquement les conduites d'égout (6) successives et est composé d'un matériau à faible conductivité thermique, comme par exemple du plastique, la conduite d'égout (6) et le tuyau d'eau de retour (7) d'un tube d'échange de chaleur (4) ayant environ le même contenu volumique par unité de longueur et les tubes de retour (7) contenant en total 5 à 50%, environ 20%, des besoins journaliers en consommation d'eau de retour, une conduite de dérivation (10) étant raccordée au tuyau de descente (8) devant l'échangeur de chaleur à contre-courant (1) au moyen d'un raccord coudé (11) étant orienté à contre-courant et passant en parallèle avec l'échangeur de chaleur à contre-courant (1), débouchant dans l'égout continuant (3) disposée en aval.

2. Dispositif selon la revendication 1, **caractérisé en ce que** l'échangeur de chaleur à contre-courant (1) comprend 4 à 10 phases des tubes d'échange de chaleur (4) ayant une longueur de 0,5 à 1 mètre selon la conductivité thermique du matériau de tube.

3. Dispositif selon la revendication 1 ou 2, **caractérisé en ce qu'**au moins la conduite d'égout (6) du tube d'échange de chaleur (4) est, en cas d'une conduite d'égout à l'intérieur, composé du métal céramique à haute conductivité thermique ou du plastique à haute conductivité thermique, et le tube d'eau de retour (7) étant composé d'un matériau avec une haute résistance thermique comme par exemple du plastique.

4. Dispositif selon la revendication 1, 2 ou 3, **caractérisé en ce que** des tubes d'échange de chaleur (4) disposés verticalement un au-dessus de l'autre sont orientés horizontalement, et que la distance entre les tubes d'échange de chaleur successifs (4) dépasse plusieurs fois, environ deux à quatre fois, le diamètre extérieur des tubes d'échange de chaleur (4), un raccord coudé (17) se reliant, après un élément de tuyau coudé (5) conclusif de plastique, à la conduite d'égout (6) du tube d'échange de chaleur (4) suivant.

5. Dispositif selon l'une des revendications 1 à 4, **caractérisé en ce que** les tubes d'échange de chaleur (4) se composent de deux tubes formateurs (13 et 14) formant la conduite d'égout (6) et le tube d'eau de retour (7), sont disposés l'un contre l'autre et reliés par une partie de surface aplanie, de préférence soudés ou reliés en utilisant une couche intermédiaire d'un matériau à haute conductivité thermique, et au moins un élément Peltier (16) étant alimenté de courant continu est positionné en particulier au moins dans un des tubes d'échange de chaleur (4) dans la zone de sortie vers l'égout continuant (3) et/ou dans au moins un des tubes d'échange de chaleur (4) dans la zone de sortie de l'eau de retour entre la conduite d'égout (6) et le tube d'eau de retour (7).

6. Dispositif selon l'une des revendications 1 à 4 ou 5, **caractérisé en ce que** dans au moins un des tubes d'échange (4), étant positionnés dans la zone de sortie de l'eau de retour, un tube de retour (7) d'un matériau à haute conductivité thermique est enveloppé d'une tube formateur (18) étant en particulier rectangulaire et à haute conductivité thermique, dans lequel l'eau est alimenté par n'importe quelle source de chaleur, ou le tube formateur (18) est pourvu d'un chauffage électrique étant alimenté par une installation solaire électrique ou n'importe quelle source de chaleur et, en particulier, attaché avec intercalation d'un matériau à haute conductivité thermique.

7. Dispositif selon la revendication 1, **caractérisé en ce que** l'égout (2) est attaché au dispositif pour la génération de pression hydraulique qui peut être mise en charge via un seuil ajustable lorsque la résistance à l'écoulement des conduites d'égout (6) des tubes d'échange de chaleur (4) augmente.
